# EUROPEAN PATENT APPLICATION

(11) **EP 1 637 433 A1**
(43) Date of publication of application: **22.03.2006**
(21) Application number: 04745830.2
(22) Date of filing: 07.06.2004
(51) Int. Cl.: B62D 1/20

(54) **MOTOR VEHICLE STEERING DEVICE**

(30) Priority: 20.06.2003 JP 2003176849; 24.09.2003 JP 2003331040
(71) Applicant: NSK Ltd., Tokyo 141-8560 (JP); NSK Steering Systems Co. Ltd, Shinagawa-ku, Tokyo 141-8560 (JP)
(72) Inventor: SEKINE, Hiroshi, c/o NSK Steering Systems Co. Ltd., Maebashi-shi, Gunma 371-08 53 (JP)
(74) Representative: Grünecker, Kinkeldey, Stockmair & Schwanhäusser Anwaltssozietät
(86) International application number: PCT/JP2004/008241
(87) International publication number: WO 2004/113150

(57) **Abstract**

A vehicle steering system **characterized by** a shaft coupling system therefor comprising an input shaft for transmitting rotation from a steering wheel, an intermediate shaft, an output shaft for driving a steering mechanism on a vehicle body, a constant velocity universal joint and a cross universal joint, wherein a connection between the input shaft and the intermediate shaft is provided by one of the constant velocity universal joint and the cross universal joint, and wherein a connection between the intermediate shaft and the output shaft is provided by the other remainder of the constant velocity universal joint and the cross universal joint.

## Description

### Technical Field

The present invention relates to a shaft coupling system or an intermediate shaft system for transmitting rotation between two shafts which are oriented in different directions and more particularly to a shaft coupling system or an intermediate shaft system for a vehicle steering system.

### Background Art

A universal joint system is used for transmitting rotation or power between two shafts which are not on a straight line. A cross universal joint, which is also referred to as Cardan joint, hook joint and cross joint, is such as to connect two shafts to each other via a cruciform member having four crossed shaft portions, and these shaft portions are such that two pairs of opposite shaft portions are borne by yokes attached to their respective shafts.

A constant velocity ball universal joint is such that a torque transmission ball is interposed in guide grooves formed, respectively, on an inner surface of an outer joint member and an outer surface of an inner joint member which is adapted to fit in the outer joint member for transmission of power between two shafts to which the inner and outer joint members are attached, respectively.

With the constant velocity ball universal joint, even in the event that there exists a crossed axes angle or angular displacement between two shafts, rotation is transmitted between the two shafts at constant velocity, whereas with the cross universal joint, there is caused a structural drawback that in the event that there exists a crossed axes angle or angular displacement between two shafts, rotation is not transmitted between the two shafts at constant velocity.

In a vehicular steering system, due to the structure of a vehicle body, the centerline of a rotational shaft of a steering wheel is angled largely relative to the centerline of a driving shaft for driving a steering mechanism on the side of the vehicle body. Due to this, a shaft coupling system is interposed between the two shafts which intersect each other so as to transmit rotation of the steering wheel to the steering mechanism on the side of the vehicle body. In this case, as such a shaft coupling system, a shaft coupling system is used which is constructed to normally have two sets of identical universal joints which are connected to each other by means of an intermediate shaft.

While the cross universal joint has an advantage that it is produced easily and inexpensively, since, as has been described above, there is provided no constant velocity between two shafts that are to be connected together, torque to be transmitted varies. To avoid this, a difference in velocity and a torque variation which would be generated with a single joint are attempted to be offset by substantially equalizing crossed axes angles or angular displacements between the intermediate shaft and the other two shafts.

However, it is not always possible to equalize the two crossed axes angles due to a reason associated with the layout of a vehicle, and in many cases, two different crossed axes angles have to be accepted for use as they are, resulting in the deterioration of steering feel.

While with the constant velocity ball universal joint, there is caused no such particular condition to be considered as one described above, there is caused a problem that the production thereof becomes difficult and requires high production costs, and therefore, the constant velocity ball universal joint has not yet reached a point that it is widely adopted in vehicular steering systems.
(Patent Document No. 1)
   JP-A-2000-257645
(Patent Document No. 2)
   JP-A-09-177813
(Patent Document No. 3)
   JP-UM-B-2526189

In addition, as to an intermediate shaft system having universal joints at both ends thereof and having a telescopic shaft made up of a female spline, a male spline and the like, in order to obtain a good steering feel, it has been demanded to reduce rattling and striking noise generated at the portion where the splines are fitted in each other when the steering wheel is operated to be rotated, as well as the sliding resistance generated when the telescopic shaft moves.

As the telescopic shaft which successfully reduces rattling and striking noise at the fitting portion and the sliding resistance associated with the telescopic motion thereof, JP-A-2000-9148 discloses a telescopic shaft in which a thin film of molybdenum disulfide, which is 0.03mm to 0.06mm thick, is applied to the surface of at least either the male spline or the female spline, and the thin film so applied is then heated to be dried so as to reduce a fitting gap. In addition, JP-A-2000-9148 also describes as the related art a telescopic shaft in which a nylon film is coated on at least either a male spine or a female spline, and thereafter, the nylon film so coated is machined to be scraped so as to reduce such a fitting gap.

Since the telescopic shaft disclosed in JP-A-2000-9148 needs no machining for scrape, the number of manufacturing steps can be reduced and hence, the production costs can also be reduced. However, since the error in the thickness of the thin film is added to the error of manufacturing the male and female splines, the fitting gap of the telescopic shaft so disclosed becomes larger than the fitting gap of the telescopic shaft described as the related art in JP-A-2000-9148, and therefore, there have been some cases where the rattling and striking noise generated at the portion where the splines are fitted in each other cannot be reduced. Consequently, in order to reduce further the fitting gap, the selective fitting of male and female splines are performed.

In addition, also with the related art described in JP-A-2000-9148, there have been some cases where the levels of rattling and striking noise and sliding resistance do not satisfy the standard values due to production errors and depending upon types of vehicles in which the telescopic shaft is installed, and as this occurs, as with the telescopic shaft disclosed in JP-A-2000-9148, the selective fitting of male and female splines are performed in order to reduce further the fitting gap.

In the telescopic shaft of JP-A-2000-9148 and the telescopic shaft of the related art, since the universal joints provided at both ends of the telescopic shaft are made up of cross universal joints, in order to avoid torque variation due to a circumferential phase deviation between the cross universal joints, the selective fitting of male and female splines has had to be performed by limiting the position of the selective fitting to a single location in the circumferential direction. Consequently, in order to reduce the fitting gap between male and female splines by virtue of the selective fitting, a number of male and female splines have to be prepared to find out a combination of a male spline and a female spline that satisfies a predetermined performance by changing combinations of male and female splines on a try-and-error basis.

The invention was made in view of the situations, and a primary problem thereof is to provide at low costs a shaft coupling system for a vehicle steering system which is less restrained by limitations resulting from layouts of vehicles by combining the advantage that the cross universal joint can be manufactured easily at low costs with the advantage that with the constant-velocity ball joint, crossed axes angles do not have to be taken into consideration.

In addition, a secondary problem of the invention is to provided an intermediate shaft system for a vehicle steering system which has a telescopic shaft which produces less rattling and striking noise and sliding resistance when the steering wheel is operated and which is manufactured at low costs.

### Disclosure of the Invention

The primary and secondary problems will be solved by the following means. Namely, according to a first aspect of the present invention, there is provided a vehicle steering system comprising a shaft coupling system including an input shaft for transmitting rotation from a steering wheel, an intermediate shaft, an output shaft for driving a steering mechanism on a vehicle body, a constant velocity universal joint and a cross universal joint, characterized in that one of the constant velocity universal joint and the cross universal joint connects the input shaft with the intermediate shaft, and the other remainder of the constant velocity universal joint and the cross universal joint connects the intermediate shaft with the output shaft.

According to a second aspect of the present invention, there is provided a vehicle steering system as set forth in the first aspect of the present invention, characterized in that the constant velocity universal joint is a constant velocity ball universal joint.

According to a third aspect of the present invention, there is provided a vehicle steering system as set forth in the second aspect of the present invention, characterized in that the constant velocity ball universal joint connects the input shaft with the intermediate shaft and the cross universal joint connects the intermediate shaft with the output shaft.

According to a fourth aspect of the present invention, there is provided a vehicle steering system as set forth in the second or third aspect of the present invention, characterized in that a crossed axes angle of the constant velocity ball universal joint is selected so as to be larger than a crossed axes angle of the cross universal joint.

According to a fifth aspect of the present invention, there is provided a vehicle steering system as set forth in the first aspect of the present invention that is characterized by the shaft coupling system, characterized in that the intermediate shaft includes an upper intermediate shaft, a lower intermediate shaft and a connecting device for connecting the upper intermediate shaft to the lower intermediate shaft in such a manner as to enable to slide in axial direction thereof and to transmit a rotation therebetween.

According to a sixth aspect of the present invention, there is provided a vehicle steering system comprising an intermediate shaft system including an input shaft for transmitting a rotation from a steering wheel, an intermediate shaft including an upper intermediate shaft, a lower intermediate shaft and a connecting device for connecting the upper intermediate shaft to the lower intermediate shaft in such a manner as to enable to slide in an axial direction thereof and to transmit a rotation therebetween, an output shaft for driving a steering mechanism on a vehicle and universal joints which provide connections, respectively, between the input shaft and the upper intermediate shaft and between the lower intermediate shaft and the output shaft, wherein at least either of the universal joints is a constant velocity universal joint.

According to a seventh aspect of the present invention, there is provided a vehicle steering system as set forth in the sixth aspect of the present invention that is characterized by the shaft coupling system,
characterized in that the universal joints are both constant velocity universal joints.

According to an eighth aspect of the present invention, there is provided a vehicle steering system as set forth in any of the fifth to seventh aspect of the present invention, characterized in that the constant velocity universal joints are constant velocity ball universal joints.

According to a ninth aspect of the present invention, there is provided a vehicle steering system as set forth in any of the fifth to eighth aspect of the present invention that is characterized by the intermediate shaft system, characterized in that the connecting device is a spline connecting device or a serration connecting device, and in that a film of polyamide resin is formed on a surface of a connecting portion on at least either a male side or a female side of the spline connecting device or the serration connecting device.

According to a tenth aspect of the present invention, there is provided a vehicle steering system as set forth in any of the fifth to eighth aspect of the present invention that is characterized by the intermediate shaft system, characterized in that the connecting device is a serration connecting device, and in that a biasing member is provided between the male side and the female side of the serration connecting device for applying a biasing force in a direction perpendicular to an axis thereof.

According to an eleventh aspect of the present invention, there is provided a vehicle steering system as set forth in any of the fifth to eighth aspect of the present invention that is characterized by the intermediate shaft system, characterized in that the connecting device is a spline connecting device, and in that the height of at least a tooth of the spline connecting device is made lower than the height of the other teeth.

According to the vehicle steering system of the invention that is characterized by the intermediate shaft system, at least one of the universal joints provided at the ends of the intermediate shaft system is made up of the constant velocity universal joint. Consequently, at the time of selective fitting, since the phase of the fitting portion of the telescopic shaft does not have to be limited to one location in the circumferential direction, it becomes possible to manufacture at low costs the intermediate shaft system which can largely reduce the time required for selective fitting and which produces less rattling and striking noise and sliding resistance.

### Brief Description of the Drawings

Fig. 1 is an explanatory drawing showing the entirety of an automotive steering mechanism to which the invention is applied.
Fig. 2 shows explanatory drawings of a shaft coupling system 1 of a first embodiment.
Fig. 3 is a partially sectional view which explains a shaft coupling system 1 of a second embodiment.
Fig. 4 is an explanatory drawing showing the entirety of a steering mechanism to which the invention is applied.
Fig. 5 shows an explanatory drawing of an intermediate shaft system 1 of a third embodiment, in which Fig. 5 (A) is a partially sectional view, Fig. 5 (B) is a sectional view taken along the line B-B, and Fig. 5(C) is a sectional view taken along the line C-C.
Fig. 6 is a sectional view taken along the line A-A in Fig. 5, which shows only a male spline with an involute tooth profile.
Fig. 7 is a sectional view taken along the line A-A in Fig. 5 which shows only a male spline with an involute tooth profile, which is different from the tooth profile shown in Fig. 6.
Fig. 8 is a sectional view taken along the line A-A in Fig. 5 which shows only a male spline with straight teeth.
Fig. 9 is an explanatory drawing of an intermediate shaft system 1 of a fourth embodiment.
Fig. 10 is an enlarged sectional view of a serration fitting portion shown in Fig. 9.
Fig. 11 is an explanatory drawing of an intermediate shaft system 1 of a fifth embodiment.

Note that in the drawings, reference numerals denote as follows: 1 an intermediate shaft system (a shaft coupling system); 2 a constant velocity ball universal joint; 21 a fastening bolt; 22 an inner joint member; 221 a ball guide groove; 231 a ball guide groove; 239 an outer joint member; 24 a torque transmission ball; 25 a ball retainer; 26 a boot; 27 a shaft hole; 271 a slitting; 272 a bolt hole; 273 a loose hole; 28 a yoke; 3 an intermediate shaft; 31 an upper intermediate shaft; 311 a male spline; 312 a tooth; 313 a male spline; 314 a male serration; 315 an elongate groove; 316 a leaf spring; 32 a lower intermediate shaft tube; 321 a female spline; 322 a female serration; 33 a film; 4 a constant velocity ball universal joint (a cross universal joint); 41 a fastening bolt; 42 an inner joint member; 421 a ball guide groove; 43 an outer joint member; 431 a ball guide groove; 439 an outer joint portion; 44 a torque transmission ball; 45 a ball retainer; 46 a boot; 47 a shaft hole; 471 a slitting; 472 a bolt hole; 473 a loose hole; 48 a yoke; 51 a steering wheel; 52 a steering column; 521 a wheel shaft; 522 an adjustment lever; 6 a vehicle body side steering mechanism; 61 an input shaft; 7 a cross universal joint; 71 a first yoke arm pair; 72 a second yoke arm pair; 73 a cross member; 773 a loose hole; 78 a yoke; 91 a vehicle main body.

### Best Mode for Carrying out the Invention

### (First Embodiment)

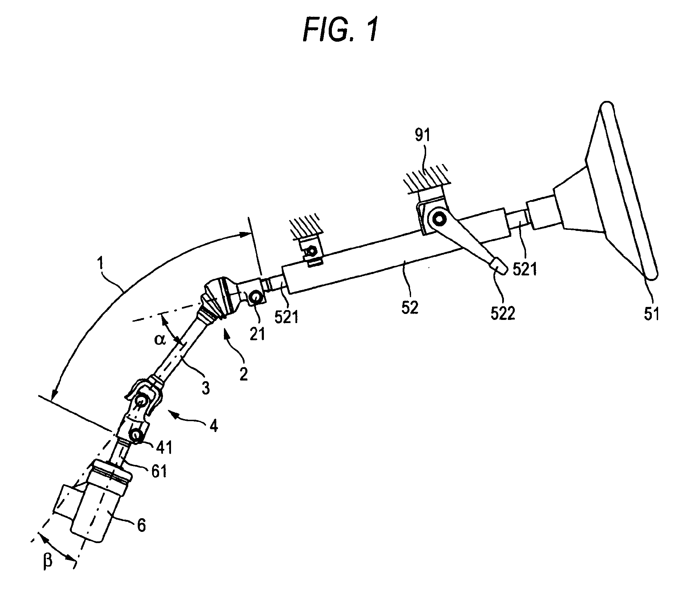

Fig. 1 is an explanatory drawing which shows the entirety of an automotive steering mechanism to which the invention is applied. This drawing shows portions upward of a vehicle body side steering mechanism 6, which is included. A steering column 52 is fixed to a vehicle main body 91 in such a manner that the inclination of the steering column 52 can be adjusted by an adjustment lever 522. The steering column 52 rotatably supports a wheel shaft 521 which passes through the interior thereof, and a steering wheel 51 is fixed to an upper end of the wheel shaft 521. A shaft coupling system 1 is connected to the other end of the wheel shaft 521 or on a lower end side of the steering column 52.

The shaft coupling system 1 includes a constant velocity ball universal joint 2, which is disposed at an upper end thereof, a cross universal joint 4, which is disposed at a lower end thereof and an intermediate shaft 3, which is disposed at an intermediate portion therebetween for connecting the joints so disposed. The constant velocity ball universal joint 2 and the cross universal joint 4 are connected, respectively, to the wheel shaft 521 and an input shaft 61 of the vehicle body side steering mechanism 6 by means of fastening bolts 21, 41. Crossed axes angles α and β are crossed axes angles of the constant velocity ball universal joint 2 and the cross universal joint 4, and in this embodiment, the crossed axes angles are angles formed between the intermediate shaft 3 and the wheel shaft 521 and the input shaft 61, respectively.

A small value is selected for the crossed axes angle β of the cross universal joint 4 in order to reduce the variation of angular velocity (variation in torque), and a total crossed axes angle (α+β) that is understood to be required for the shaft coupling system 1 is secured by increasing the crossed axes angle α by such an extent that the crossed axes angle β is reduced. As a result, the crossed axes angle α is made larger than the crossed axes angle β. In other words, the constant velocity ball universal joint 2 is provided on a side where a larger crossed axes angle is required due to a reason associated with the layout of a vehicle, and the cross universal joint 4 is provided on an opposite side thereto.

As shown in Fig. 1, in a case where the cross universal joint 4 is provided at the upper end of the shaft coupling system 1, the constant velocity ball universal joint 2 is provided at the upper end thereof, and the crossed axes angle α of the constant velocity ball universal joint 2 and the crossed axes angle β of the cross universal joint 4 are made to be 40° and 10°, respectively, a torque variation occurring on the cross universal joint 4 becomes on the order of about +/-1.5%, and almost no influence is imposed on the steering feel. From the calculation point of view, the crossed axes angle β is made to preferably be 18° or smaller and to more preferably be 13° or smaller, and torque variations associated with the respective crossed axes angles become about +/-5% and about+/-2.6%.

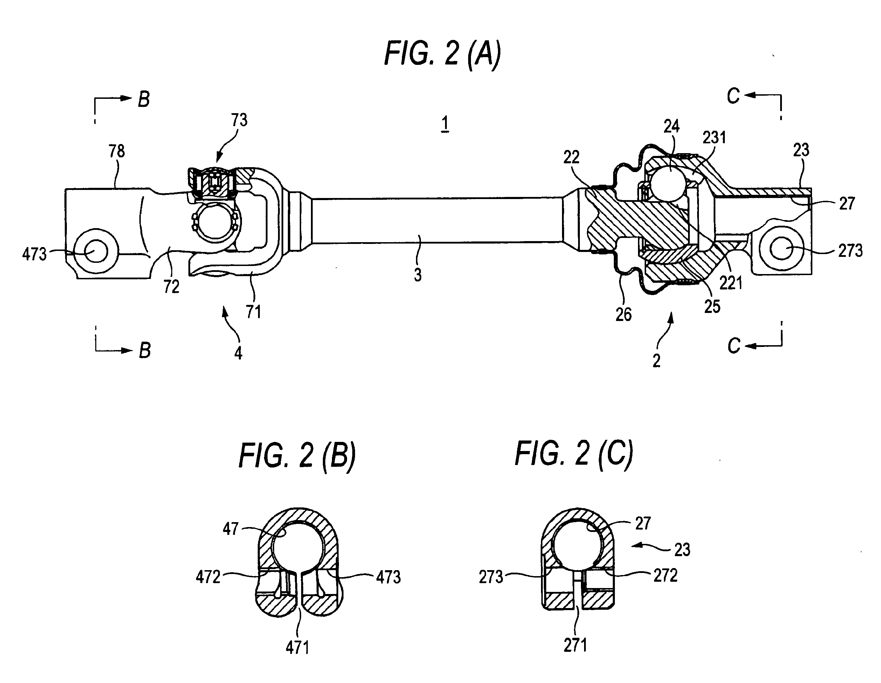

Fig. 2 shows explanatory drawings of the shaft coupling system 1 of the first embodiment, in which Fig. 2 (A) is a partially sectional view, Fig. 2(B) is a sectional view taken along the line B-B and Fig. 2(C) is a sectional view taken along the line C-C.

The shaft coupling system 1 is constructed as follows. An inner joint member 22, which constitutes part of the constant velocity ball universal joint 2, and a first yoke arm pair 71 made up of a pair of arms, which constitutes part of the cross universal joint 4, are formed on both ends of the intermediate shaft 3 with the inner joint member 22 being formed to the end where the constant velocity ball universal joint 22 is disposed and the first yoke arm pair 71 being formed to the end where the cross universal joint 4 being disposed.

A portion in the vicinity of a distal end of the inner joint member 22 of the constant velocity ball universal joint 2 is formed spherically, and furthermore, a ball guide groove 221 is formed on this spherical surface. On the other hand, an outer joint member 23 includes a spherical recess and a ball guide groove 231 is formed in this recess. The two ball guide grooves 221, 231 both extend along the axial direction of the intermediate shaft 3 and the outer joint member 23, and a common torque transmission ball 24 is fitted in these grooves in such a manner as to roll therein, whereby the inner joint member 22 and the outer joint member 23 are connected to each other with respect to rotation.

A ball retainer 25 having an inner surface which is complementary to the spherical surface of the inner joint member 22 is made to rotate about the center of the spherical surface while holding the torque transmission ball 24. A portion in the vicinity of a boundary between the inner joint member 22 and the outer joint member 23 is covered by a boot 26 which constitutes a soft cover so as to prevent the infiltration of dust from the outside.

The outer joint member 23 has a shaft hole 27 in which the wheel shaft 521 is to be fixed, and a slitting 271 is provided in this shaft hole 27. The fastening bolt 21 is screwed into a loose hole 273 and a bolt hole 272 which are formed on both sides of the slitting 271 so as to fix the outer joint member 23 to the wheel shaft 521.

An output yoke member 78 of the cross universal joint 4 has a shaft hole 47 in which the input shaft 61 of the vehicle body side steering mechanism 6 is to be fixed, and a slitting 471 is provided in this shaft hole 47. The fastening bolt 41 is screwed into a loose hole 473 and a bolt hole 472 which are formed on both sides of the slitting 471 so as to fix the output yoke member 78 to the input shaft 61. Furthermore, a second yoke arm pair 72 made up of a pair of arms is formed on the output yoke member 78.

A cross member 73 includes four shaft portions which extend in a cruciform fashion, and the respective pairs of opposite shaft portions are borne by the first yoke arm pair 71 and the second yoke arm pair 72, respectively. The intermediate shaft 3 and the output yoke member 78 are connected together for transmission of rotation by interposing the cross member 73 therebetween.

As has already been described, while with the cross universal joint 4, which is one of the universal joints, since no constant velocity is produced between the two shafts which it connects, there occurs a torque variation, the crossed axes angle β of the cross universal joint 4 can be reduced by making the constant velocity ball universal joint 2, which is the other universal joint, bear a large crossed axes angle α. Due to this, almost all torque variations occurring on the shaft coupling system 1 can be reduced to such an extent that the steering feel is not substantially affected.

### (Second Embodiment)

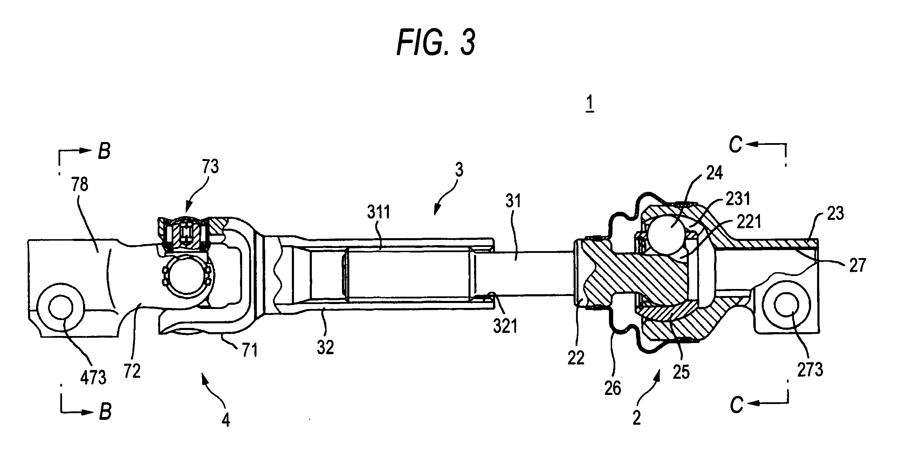

Fig. 3 is a partially sectional view which explains a shaft coupling system 1 of a second embodiment. Hereinafter, only points which differ from the first embodiment will be described, and the description of the first embodiment is to be referred to as to descriptions of the other points and sectional views taken along the lines B-B and C-C in Fig. 3. These different points are that an intermediate shaft 3 is made up of partial shafts which are divided into two halves of an upper intermediate shaft 31 associated with the inner joint member 22 and a lower intermediate shaft 32 associated with the cross universal joint 4 and that a male spline 311 is formed on the upper intermediate shaft 31 and a female spline adapted to fit on the male spline 311 is formed on the lower intermediate shaft 32.

The intermediate shaft 3 is allowed to telescope so as to transmit only rotation by virtue of this spline connection. The telescopic characteristic of the intermediate shaft 3 allows for a construction in which the lower end position of the wheel shaft 521 becomes movable when the inclination of the steering column 52 is adjusted with respect to the vehicle main body 91.

In place of the spline connection, a shaft mechanism having the same function such as a connecting mechanism made up of a key and a key groove can be adopted which is made up of two partial shafts, which are connected in such a manner as to telescope but not to rotate relatively. In addition, in place of the spline connecting portion of the intermediate shaft 3, a shock absorbing mechanism represented by a rubber coupling or a mechanism for absorbing displacement in collision can be provided at a lower portion of the wheel shaft 521.

While in these embodiments, nothing has been described as to a power steering system, it is natural that a power steering system, electric or hydraulic, can be installed on the lower portion of the wheel shaft 521 or on the input shaft 61. Furthermore, it is possible to provide not only the inclination adjustment mechanism (a tilt mechanism) that has already been described but also a mechanism for adjusting the axial position and vertical position of the steering wheel (a telescoping mechanism, a tilt and telescoping mechanism) on the steering column 52, or it is possible for the steering column 52 to have none of such mechanisms.

In addition, it is natural that depending on limitations imposed by layouts of vehicles, the constant velocity ball universal joint 2 and the cross universal joint 4 can be disposed reversely, that is, the cross universal joint 4 can be disposed on the side of the wheel shaft 521, whereas the constant velocity ball universal joint 2 can be disposed on the side of the vehicle body side gear mechanism 6.

### (Third Embodiment)

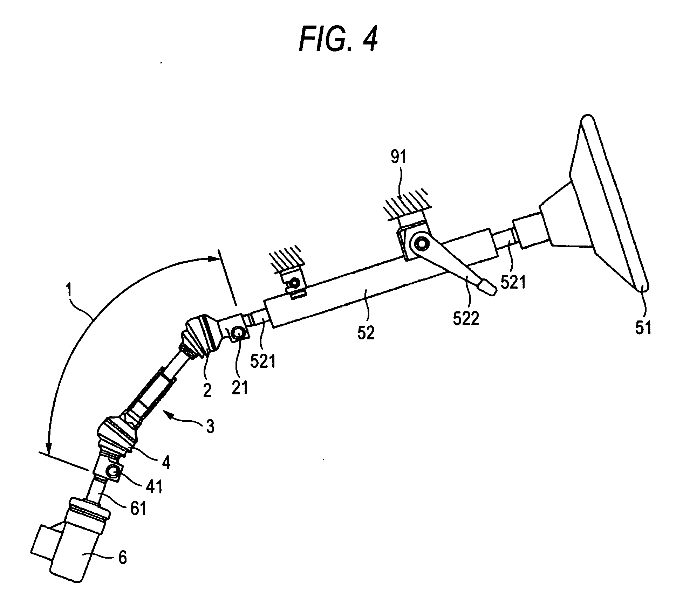

Fig. 4 is an explanatory drawing which shows the entirety of an automotive steering mechanism to which the invention is applied. This drawing shows portions upward of a vehicle body side steering mechanism 6, which is included. A steering column 52 is fixed to a vehicle main body 91 in such a manner that the inclination of the steering column 52 can be adjusted by an adjustment lever 522. A wheel shaft 521, which passes through the interior of the steering column, is supported rotatably within the steering column 52, and a steering wheel 51 is fixed to an upper end of the wheel shaft 521. An intermediate shaft system 1 is connected to the other end of the wheel shaft 521 or on a lower end side of the steering column 52.

The intermediate shaft system 1 includes constant velocity ball universal joints 2, 4 at upper and lower ends thereof and an intermediate shaft 3 for connecting these universal joints to each other at an intermediate portion therebetween. The respective constant velocity ball universal joints 2 are connected, respectively, to the wheel shaft 521 and an input shaft 61 of the vehicle body side steering mechanism 6.

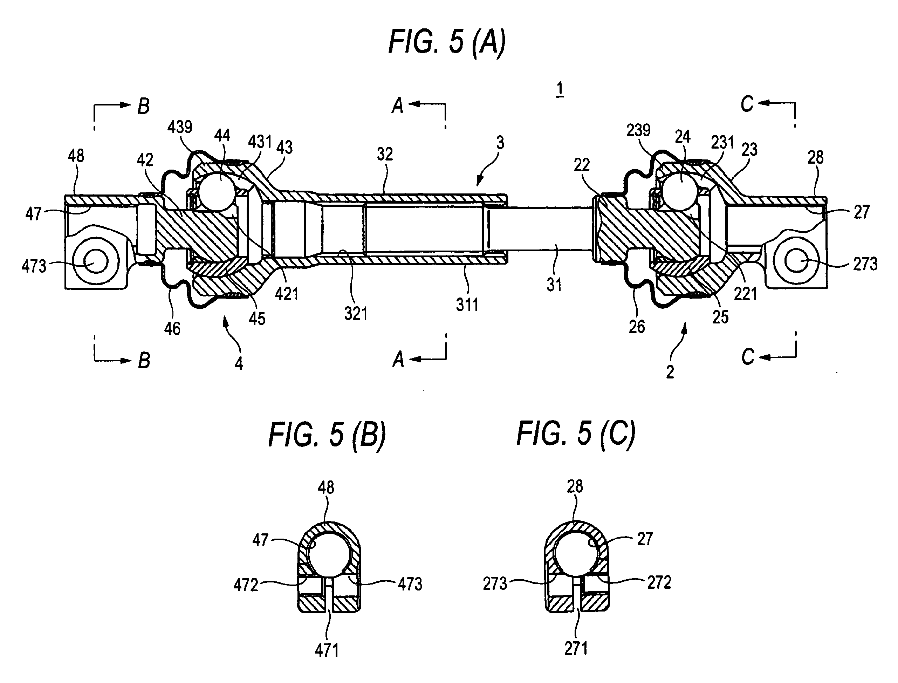

Fig. 5 shows explanatory drawings of the intermediate shaft system 1 of a third embodiment, in which Fig. 5(A) is a partially sectional view, Fig. 5(B) is a sectional view taken along the line B-B in Fig. 5(A) and Fig. 5(C) is a sectional view taken along the line C-C in Fig. 5(A).

The intermediate shaft system 1 is constructed as follows. The constant velocity ball universal joints 2, 4 are formed at the ends of the intermediate shaft 3, and inner joint members 22, 42, which constitute parts of the constant velocity ball universal joints 2, 4, are formed, respectively. Portions in the vicinity of distal ends of the inner joint members 22, 42 of the constant velocity ball universal joints 2, 4 are formed spherically, and furthermore, ball guide grooves 221, 421 are formed on the spherical surfaces.

On the other hand, outer joint members 23, 43 have outer joint portions 239, 439 which include spherical recesses, and ball guide grooves 231, 431 are formed in these recesses. These two ball guide grooves 221, 421, 231, 431 extend along the axial direction of the intermediate shaft 3 and the outer joint members 23, 43, and torque transmission balls 24, 44 are fitted, respectively, in these grooves in such a manner as to roll therein, whereby the inner joint members 22, 42 and the outer joint members 23, 43 are connected, respectively, to each other with respect to rotation.

Ball retainers 25, 45 having inner surfaces complementary to the spherical surfaces of the inner joint members 22, 42 are made to rotate about the centers of the spherical surfaces while holding the torque transmission balls 24, 44. Portions in the vicinity of boundaries between the inner joint members 22, 42 and the outer joint portions 239, 439 are covered, respectively, by boots 26, 46 which constitute soft covers so as to prevent the infiltration of dust from the outside.

The outer joint member 23 and the inner joint member 42 have yokes 28, 48 for fixing the wheel shaft 521 and the input shaft 61 of the vehicle body side steering mechanism 6 thereto, respectively. The yokes 28, 48 have shaft holes 27, 47, and slittings 271, 471 are formed in these shaft holes 27, 47, respectively. The fastening bolts 21, 41 are screwed, respectively, into loose holes 273, 473 and bolt holes 272, 472 which are formed, respectively, on both sides of the slittings 271, 471 so as to fix the outer joint member 23 to the wheel shaft 521 and the inner joint member 42 to the input shaft 61, respectively.

In order for the fastening bolts 21, 41 to be fastened from the same direction when assembled to the vehicle body, the loose holes 273, 473 are formed in the same side of the intermediate shaft system 1 as shown in Fig. 5, thereby making it possible to increase the working efficiency.

The intermediate shaft 3 of the third embodiment is made up of an upper intermediate shaft 31, which extends integrally downward from the inner joint member 22, and a lower intermediate shaft tube 32, which extends integrally upward from the outer joint member 43. A male spline 311 is formed on the upper intermediate shaft 31 and a female spline 321 adapted to be fitted on the male spline 311 is formed on the lower intermediate shaft tube 32. The upper intermediate shaft 31 and the lower intermediate shaft tube 32 are connected to each other in such a manner as to slide in the axial direction relative to each other so as to transmit only rotational force through the spline connection. The telescoping of the intermediate shaft 3 allows for a construction in which the lower end position of the wheel shaft 521 is allowed to move when the inclination of the steering column 52 is adjusted relative to the vehicle main body 91 and furthermore a relative displacement generated between the vehicle body side steering mechanism 6 and the steering column can be absorbed.

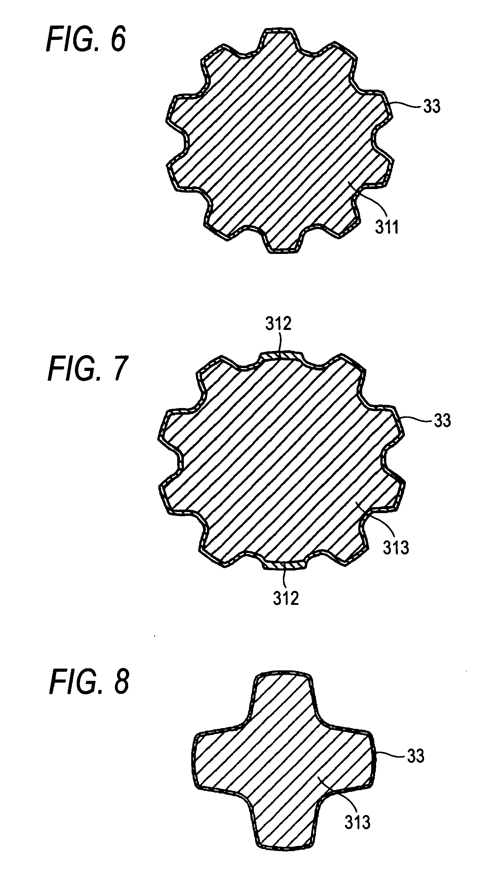

Fig. 6 is a sectional view taken along the line A-A in Fig. 5 which shows only the male spline 311 with an involute tooth profile. As shown in Fig. 6, a film 33, which is superior in lubricity and wear resistance, for example, a film 33 of polyamide resin, polyester resin and polyphenylene resin is coated on the surface of the male spline 311, and the surface is finished by scraping. In addition, as the film, a film containing molybdenum disulfide may be used. The film 33 may be coated on the surface of the female spline 321 or may be coated on both the male spline 311 and the female spline 321. The intermediate shaft 3 is configured by fitting the male spline 311 and the female spline 321, which are constructed as has been described above, in or on each other and applying grease in the fitting portion.

Fig. 7 is a sectional view taken along the line A-A in Fig. 5 which shows only a male spline 311 with an involute tooth profile which is different from the tooth profile shown in Fig. 6. Similar to Fig. 6, also in the case of Fig. 7, a film 33, which is superior in lubricity and wear resistance, for example, a film of polyamide resin is coated on the surface of the male spline 311, and the surface so coated is finished by scraping. A point which differs from Fig. 6 is that the height (height) of teeth 312, 312 which face each other is formed lower than that of the other teeth.

According to this configuration, air can be vented through the portions where the tooth height is reduced while the intermediate shaft 3 is in use on the vehicle, so that the male spline 311 and the female spline 321 can be kept sliding smoothly. While shortening the height of the two teeth 312, 312 is preferable since the dynamic balance when the intermediate shaft 3 is rotating becomes better, the height of only a tooth may be shortened. In addition, the height of a tooth on the female spline 321 side may be shortened.

Fig. 8 is a sectional view taken along the line A-A in Fig. 5 which shows only a male spline 311 with straight teeth whose profile is different from those shown in Figs. 6, 7. Similar to Figs. 6, 7, in the case of Fig. 8, a film 33, which is superior in lubricity and wear resistance, for example, a film of polyamide resin is coated on the surface of the male spline 311, and the surface so coated is finished by scraping.

Thus, as has been described heretofore, in the intermediate shaft system for the vehicle steering system according to the third embodiment, in order to completely eliminate rattling and striking noise generated when the steering wheel is operated, in the event that it is required that the fitting gap between the male spline 311 and the female spline 321 approaches zero as close as possible and that the sliding resistance is reduced, the selective fitting of the male spline 311 and the female spline 321 is to be implemented.

In the third embodiment, since the constant velocity universal joints are used at the ends of the intermediate shaft 3, being different from the case where the intermediate shaft includes the conventional cross universal joint, the circumferential phases of the male spline 311 and the female spline 321 are limited to a single location in no case. Consequently, since it becomes extremely easy to find out phases of the male spline 311 and the female spline 321 where the fitting gap becomes minimum by changing the circumferential phases thereof, the time required for the selective fitting is reduced, thereby making it possible to manufacture the intermediate shaft system at low costs. For example, with the male spline having 10 splines as shown in Figs. 6, 7, a single combination of male and female splines can generate 10 possibilities where the selective fitting is implemented well.

### (Fourth Embodiment)

As with the third embodiment, while an intermediate shaft system 1 according to a fourth embodiment includes constant velocity ball universal joints at upper and lower ends thereof and an intermediate shaft 3 which connects the joints to each other at an intermediate position therebetween and which is made up of an upper intermediate shaft 31 and a lower intermediate shaft tube 32, the fourth embodiment differs from the third embodiment in a point that a serration connection is used for the connection between the upper intermediate shaft 31 and the lower intermediate shaft tube 32 and that a spring is installed for preventing loosening at a portion where the serration connection is effected.

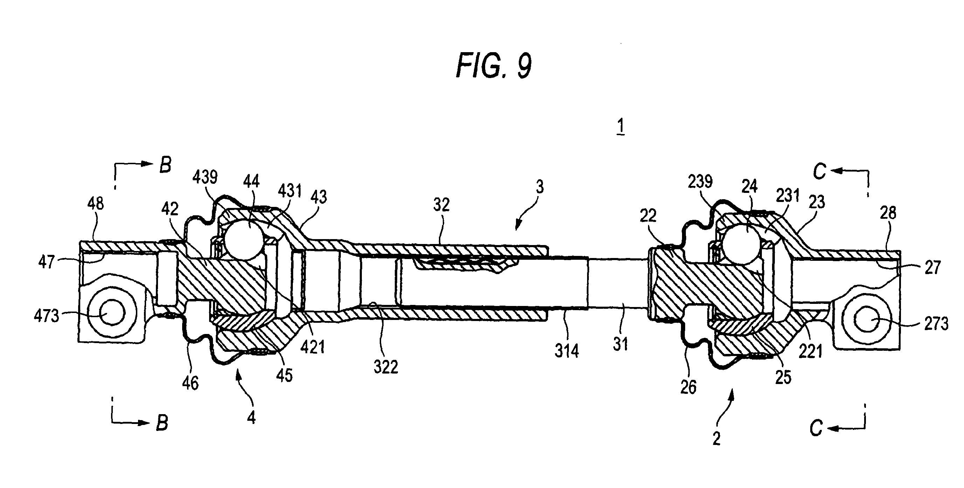

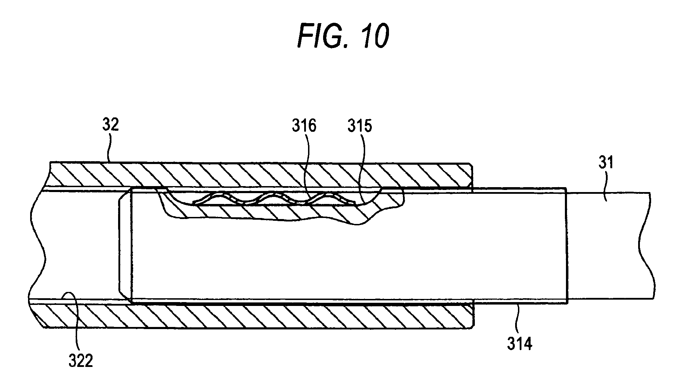

In the following description, only points which are different from the third embodiment will be described, and the description of the third embodiment is to be referred to as to descriptions of the other points and sectional views taken along the lines B-B and C-C in Fig. 9. Fig. 9 is an explanatory drawing which explains the intermediate shaft system 1 of the fourth embodiment, and Fig. 10 is an enlarged sectional view of a serration fitting portion shown in Fig. 9.

As shown in Figs. 9 and 10, an intermediate shaft 3 of the fourth embodiment is made up of an upper intermediate shaft 31 which extends integrally downward from an inner joint member 22 and a lower intermediate shaft tube 32 which extends integrally upward from an outer joint member 43, and a male serration 314 is formed on the upper intermediate shaft 31, whereas a female serration 322 adapted to be fitted on the male serration 314 is formed on the lower intermediate shaft tube 32.

The upper intermediate shaft 31 and the lower intermediate shaft tube 32 are connected to each other in such a manner as to slide in the axial direction relative to each other so as to transmit only rotational force through the serration connection. The telescoping of the intermediate shaft 3 allows for a construction in which the lower end position of the wheel shaft 521 is allowed to move when the inclination of the steering column 52 is adjusted relative to the vehicle main body 91 and furthermore a relative displacement generated between the vehicle body side steering mechanism 6 and the steering column can be absorbed.

A long groove 315 is formed on the male serration 314 in parallel with the axial direction of the upper intermediate shaft 31, and a wavy leaf spring 316 is inserted in the long groove 315. The leaf spring 316 applies a biasing force in a direction perpendicular to the axis between the male serration 314 and the female serration 322 to thereby eliminate loosening between the male serration 314 and the female serration 322 and prevent the generation of rattling and striking noise.

Similar to the third embodiment, also in the case of the fourth embodiment, a treatment can be effected in which a film 33 which is superior in lubricity and wear resistance, for example, a film 33 of polyamide resin is coated on the surface of either the male serration 314 or the female serration 322 or on the surfaces of both the male serration 314 and the female serration 322, and the surface or surfaces are finished by scraping.

In the intermediate shaft system for the vehicle steering system according to the fourth embodiment, in the event that it is required to completely eliminate rattling and striking noise generated when the steering wheel is operated and to reduce the sliding resistance, while the selective fitting of the male serration 314 and the female serration 322 is to be implemented, since the constant velocity universal joints are used at the ends of the intermediate shaft 3 as in the case with the third embodiment, being different from the case where the intermediate shaft includes the conventional cross universal joint, the circumferential phases of the male serration 314 and the female serration 322 are limited to a single location in no case.

Consequently, since it becomes extremely easy to find out phases of the male serration 314 and the female serration 322 where the fitting gap becomes minimum by changing the circumferential phases thereof, the time required for the selective fitting is reduced, thereby making it possible to manufacture the intermediate shaft system at low costs.

### (Fifth Embodiment)

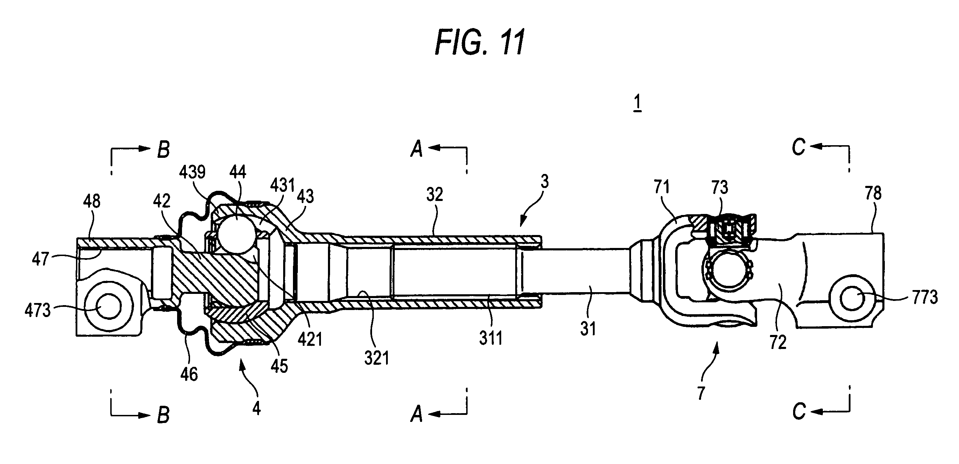

Fig. 11 is a partial sectional view which explains an intermediate shaft system 1 of a fifth embodiment. Hereinafter, only points which are different from the first embodiment will be described, and the description of the third embodiment is to be referred to as to descriptions of the other points and sectional views taken along the lines B-B and C-C in Fig. 11. The fifth embodiment is such that one of the constant velocity ball universal joints in the third embodiment is replaced by a cross universal joint.

A first yoke arm pair 71, which is made up of a pair of arms and which constitutes part of a cross universal joint 7, is formed on a right-hand end of an upper intermediate shaft 31. A yoke 78 of the cross universal joint 7 is inserted into a wheel shaft 521 and is fixed in place by means of a fastening bolt, which is inserted in a loose hole 773. A second yoke arm pair 72, which is made up of a pair of arms, is formed on the yoke 78.

A cross member 73 includes four shaft portions which extend in a cruciform fashion, and the respective pairs of opposite shaft portions are borne by the first yoke arm pair 71 and the second yoke arm pair 72, respectively. The upper intermediate shaft 31 and the yoke 78 are connected to each other for transmission or rotation by interposing the cross member 73 therebetween.

Thus, as has been described heretofore, in the intermediate shaft system for the vehicle steering system of the fifth embodiment, since the cross universal joint, which is inexpensive, is used for one of the universal joints and the constant-velocity ball joint is used for the other universal joint, when performing the selective fitting of a male spline 311 and a female spline 321 as in the case with the third embodiment and the second embodiment, being different from the case where the intermediate shaft includes the conventional cross universal joint, the circumferential phases of the male spline 311 and the female spline 321 are limited to a single location in no case due to the constant velocity universal joint being used for one of the universal joints of an intermediate shaft 3.

Consequently, since it becomes extremely easy to find out phases of the male spline 311 and the female spline 321 where the fitting gap becomes minimum by changing the circumferential phases thereof, the time required for the selective fitting is reduced, thereby making it possible to manufacture the intermediate shaft system at low costs.

### Industrial Applicability

According to the shaft coupling system of the invention, since the cross universal joint, which is manufactured easily and at low costs, and the constant velocity ball universal joint, which eliminates the necessity of consideration of crossed axes angles, are combined, the constant velocity ball universal joint can be made to bear a large crossed axes angle in order to deal with a large crossed axes angle as a whole which results from a limitation imposed by the layout of the vehicle. Due to this, it is possible to provide the advantage that the shaft coupling system can be provided which produces less torque variation and which is inexpensive.

## Claims

1. A vehicle steering system comprising a shaft coupling system including:
an input shaft for transmitting rotation from a steering wheel;
an intermediate shaft;
an output shaft for driving a steering mechanism on a vehicle body;
a constant velocity universal joint; and
a cross universal joint,
**characterized in that**:
one of the constant velocity universal joint and the cross universal joint connects the input shaft with the intermediate shaft; and
the other remainder of the constant velocity universal joint and the cross universal joint connects the intermediate shaft and the output shaft.

2. A vehicle steering system as set forth in Claim 1, **characterized in that** the constant velocity universal joint is a constant velocity ball universal joint.

3. A vehicle steering system as set forth in Claim 2, **characterized in that**
the constant velocity ball universal joint connects the input shaft and the intermediate shaft; and
the cross universal joint connects the intermediate shaft with the output shaft.

4. A vehicle steering system as set forth in Claim 2 or 3, **characterized in that** a crossed axes angle of the constant velocity ball universal joint is selected so as to be larger than a crossed axes angle of the cross universal joint.

5. A vehicle steering system as set forth in Claim 1, **characterized in that** the intermediate shaft comprises an upper intermediate shaft, a lower intermediate shaft and a connecting device for connecting the upper intermediate shaft to the lower intermediate shaft in such a manner as to enable to slide axial direction thereof and to transmit a rotation therebetween.

6. A vehicle steering system comprising an intermediate shaft system including:
an input shaft for transmitting a rotation from a steering wheel;
an intermediate shaft including an upper intermediate shaft, a lower intermediate shaft and a connecting device for connecting the upper intermediate shaft to the lower intermediate shaft in such a manner as to enable to slide axial direction thereof and to transmit a rotation therebetween;
an output shaft for driving a steering mechanism on a vehicle; and
universal joints which provide connections, respectively, between the input shaft and the upper intermediate shaft and between the lower intermediate shaft and the output shaft,
**characterized in that** at least either of the universal joints is a constant velocity universal joint.

7. A vehicle steering system as set forth in Claim 6, **characterized in that** the universal joints are both constant velocity universal joints.

8. A vehicle steering system as set forth in any of Claims 5 to 7, **characterized in that** the constant velocity universal joints are constant velocity ball universal joints.

9. A vehicle steering system as set forth in any of Claims 5 to 7, **characterized in that** the connecting device is a spline connecting device or a serration connecting device, and
a film of polyamide resin is formed on a surface of a connecting portion on at least either a male side or a female side of the spline connecting device or the serration connecting device.

10. A vehicle steering system as set forth in any of Claims 5 to 8, **characterized in that** the connecting device is a serration connecting device, and
a biasing member is provided between the male side and the female side of the serration connecting device for applying a biasing force in a direction perpendicular to an axis thereof.

11. A vehicle steering system as set forth in any of Claims 5 to 8, **characterized in that** the connecting device is a spline connecting device, and **in that**
the height of at least a tooth of the spline connecting device is made lower than the height of the other teeth.
